# EUROPÄISCHE PATENTSCHRIFT

(11) **EP 1 296 031 B1**
(45) Veröffentlichungstag und Bekanntmachung des Hinweises auf die Patenterteilung: **27.10.2004**
(21) Anmeldenummer: 02018407.3
(22) Anmeldetag: 16.08.2002
(51) Int. Cl.: F01N 3/32, F01N 3/22, F01N 3/34

(54) **Brennkraftmaschine mit Abgasanlage und Sekundärluftzuführung**
Internal combustion engine comprising an exhaust gas system and secondary air supply
Moteur à combustion interne comprenant un système d'échappement avec amenée d'air secondaire

(30) Priorität: 22.09.2001 DE 10146751
(43) Veröffentlichungstag der Anmeldung: 26.03.2003
(73) Patentinhaber: Bayerische Motoren Werke Aktiengesellschaft, 80809 München (DE)
(72) Erfinder: Klauer, Norbert, 85778 Haimhausen (DE); Maehrle, Werner, 85293 Reichertshausen (DE); Uphoff, Ulrich, Dr., 81927 München (DE)

(56) Entgegenhaltungen:
- EP-A- 1 101 921
- DE-A- 10 003 955
- DE-A- 19 847 477
- US-A- 4 674 277

## Beschreibung

Die Erfindung bezieht sich nach dem Oberbegriff des Patentanspruches 1 auf eine Brennkraftmaschine mit Abgasanlage und Sekundärluftzuführung, wobei Sekundärluft entsprechend der Zündfolge aufeinander folgender Zylinder gruppenweise über gesonderte Sekundärluftleitungen zugeführt ist.

Die Erfindung geht von der EP 1 101 921 A2 aus. Aus dieser ist eine mehrzylindrige Brennkraftmaschine mit einer Abgasanlage und einer Sekundärluftzuführung bekannt, wobei die Sekundärluft entsprechend der Zündfolge aufeinanderfolgender Zylinder gruppenweise über gesonderte Sekundärluftleitungen zugeführt ist. Hierbei sind die getrennt ausgebildeten Sekundärluftleitungen mit Einblaseeinrichtungen in zylinderkopfseitigen Auslasskanälen des Zylinderkopfes angeordnet. Femer sind die Leitungsabschnitte der auslassseitig angeordneten Sekundärluftleitungen zwischen den Einblaseinrichtungen mit zusätzlichen Wärmeübergangsflächen zum Kühlmittel der Brennkraftmaschine ausgerüstet.

Nachteilig bei dieser Ausgestaltung ist, dass zwischen den Sekundärluftleitungen starke Abgas-Pulsationen auftreten können. Aufgabe der vorliegenden Erfindung ist es, diese Abgas-Pulsationen zu vermeiden.

Diese Aufgabe ist mit dem Patentanspruch 1 dadurch gelöst, dass bei abgestellter Sekundärluftzufuhr eine mit beiden Sekundärluftleitungen in Verbindung stehende Ventileinrichtung im Anschluss an ein Kaltstarteinblasen über eine mittels Maschinenparameter bestimmbare Zeit beide Sekundärluftleitungen gesteuert/geregelt, verbindet.

Dies zeitigt den Vorteil, dass mittels der Ventileinrichtung Abgas-Pulsationen zwischen beiden Sekundärluftleitungen in Abhängigkeit der Dauer der gewünschten Zusatz-Heizwirkung gesteuert/geregelt gedrosselt sind zur Vermeidung starker Störungen der Abgasdynamik. Mit dieser Ventileinrichtung kann durch Unterbinden der Abgas-Pulsation schließlich der Wärmeeintrag ins Kühlmittel verringert werden, wenn die Brennkraftmaschine ihre Betriebstemperatur erreicht hat und eine weitere Wärmezufuhr unerwünscht ist. Ferner wird der nachteilige Effekt auf die Abgasdruckschwingungen und damit auf Drehmomententfaltung der Brennkraftmaschine durch Absperren des Abgasübertrittes zwischen den gesonderten Sekundärluftleitungen beseitigt.

In bevorzugter Ausgestaltung der Erfindung ist jede Sekundärluftleitung als ein rohr artiger Einsatz ausgebildet, der im Außenumfang mit scheibenartigen Wärmeübergangselementen aus einem gut wärmeleitenden Material ausgerüstet ist.

Schließlich steht in weiterer Ausgestaltung der Erfindung eine Luftpumpe über eine Förderleitung mit der Ventileinrichtung in Verbindung, wobei gegebenenfalls ein zusätzliches Ventil in der Förderleitung vorgesehen sein kann. Eine derartige Ausgestaltung ist insbesondere zweckmäßig bei einem Sechszylinder-Motor.

Die Erfindung ist anhand eines in der Zeichnung schematisch dargestellten Ausführungsbeispiels beschrieben. Es zeigt
- Figur 1: eine Sechs-Zylinder-Brennkraftmaschine in schematischer Darstellung,
- Figur 2: eine der Sekundärluftleitungen in abschnittsweiser Darstellung mit Wärmeübergangselementen.

Eine Brennkraftmaschine 1 mit Zylindern Z1 mit Z6 umfasst eine Abgasanlage 2 und eine dieser zugeordnete Sekundärluftzuführung 3, wobei Sekundärluft entsprechend der Zündfolge aufeinander folgender Zylinder Z1 bis Z6 gruppenweise über gesonderte Sekundärluftleitungen 4, 5 zugeführt ist. Um die aus Emissionsgründen erforderliche Sekundärluftzuführung 3 zur schnelleren Erwärmung der Brennkraftmaschine 1 erfindungsgemäß zu nutzen, sind die getrennt ausgebildeten Sekundärluftleitungen 4, 5 in einem flüssigkeitsgekühlten Zylinderkopf 6 der mehrzylindrigen Brennkraftmaschine 1 mit Einblaseinrichtungen 7 in zylinderkopfseitige Auslasskanäle 8 angeordnet, wobei Leitungsabschnitte 4', 5' der auslassseitig angeordneten Sekundärluftleitungen 4, 5 zwischen den Einblaseinrichtungen 7 mit zusätzlichen Wärmeübergangsflächen 9 zum Kühlmittel der Brennkraftmaschine 1 ausgerüstet sind.

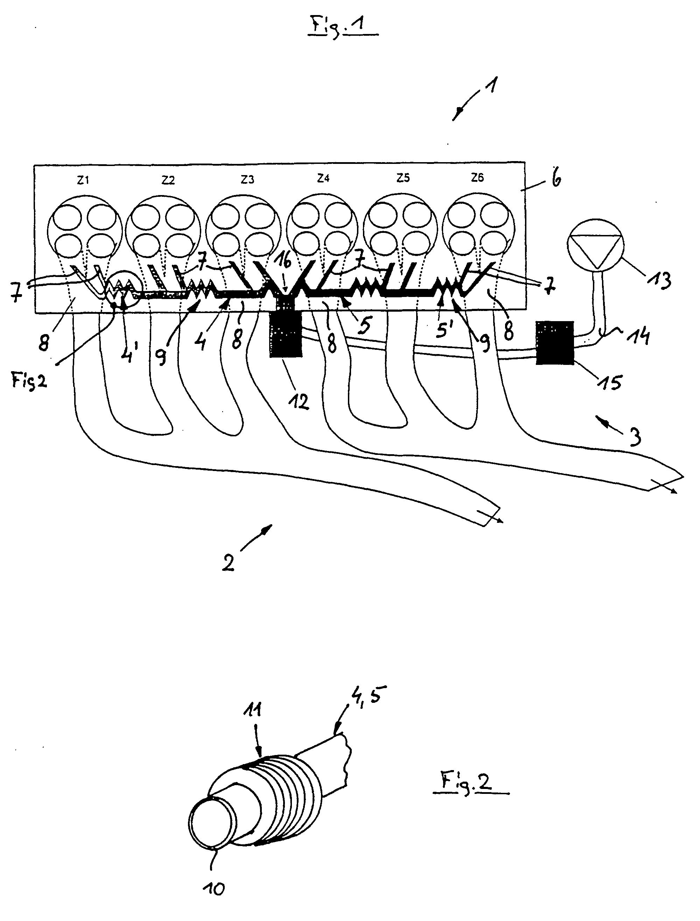

Ein Ausführungsbeispiel der in Figur 1 schematisch dargestellten Wärmeübergangsfläche 9 ist in Figur 2 aufgezeigt, wobei jede Sekundärluftleitung 4, 5 als ein rohrartiger Einsatz 10 ausgebildet ist, der am Außenumfang mit scheibenartigen Wärmeübergangselementen 11 aus einem gut wärmeleitenden Material ausgerüstet ist.

Weiter stehen beiden Sekundärluftleitungen 4, 5 bei 16 miteinander in Verbindung derart, dass bei abgestellter Sekundärluftzufuhr im Anschluss an ein Kaltstart-Einblasen über eine mittels Maschinenparameter bestimmbare Zeit beide Sekundärluftleitungen 4, 5 gesteuert/geregelt verbindbar sind. Mittels dieser Ventileinrichtung 12 können Abgas-Pulsationen zwischen beiden Sekundärluftleitungen 4, 5 in Abhängigkeit der Dauer der gewünschten Zusatz-Heizwirkung so gesteuert/geregelt werden, dass bei geringer Störung der Abgasdynamik in der Abgasanlage 2 eine ausreichend schnelle Erwärmung der Brennkraftmaschine 1 erzielt ist.

Die Sekundärluftzuführung 3 ist weiter mit einer Luftpumpe 13 ausgerüstet, die über eine Förderleitung 14 mit der Ventileinrichtung 12 in Verbindung steht, wobei gegebenenfalls ein zusätzliches Ventil 15 in der Förderleitung 14 vorgesehen sein kann.

Die Erfindung bietet folgende Vorteile:
Geringerer Kraftstoffverbrauch in der Warmlaufphase,
geringere Schadstoffemissionen in der Warmlaufphase,
geringerer Motorverschleiß durch verkürzte Kaltbetriebszeiten,
Schonung des Motoröles,
gesteigerte Heizleistung zur Fahrzeuginnenraumerwärmung, und
gesteigertes Motordrehmoment durch geringer gestörte Abgasdynamik.

## Patentansprüche

1. Brennkraftmaschine mit Abgasanlage und Sekundärluftzuführung,
- wobei Sekundärluft entsprechend der Zündfolge aufeinander folgender Zylinder (Z1 bis Z6) gruppenweise über gesonderte Sekundärluftleitungen (4, 5) zugeführt ist, wobei
- die getrennt ausgebildeten Sekundärluftleitungen (4, 5) in einem flüssigkeitsgekühlten Zylinderkopf (6) der mehrzylindrigen Brennkraftmaschine (1) mit Einblaseinrichtungen (7) in zylinderkopfseitige Auslasskanäle (8) angeordnet sind, und dass
- Leitungsabschnitte (4', 5') der auslassseitig angeordneten Sekundärluftleitungen (4, 5) zwischen den Einblaseinrichtungen (7) mit zusätzlichen Wärmeübergangsflächen (9) zum Kühlmittel der Brennkraftmaschine (1) ausgerüstet sind,
**dadurch gekennzeichnet, dass**
bei abgestellter Sekundärluftzufuhr eine mit beiden Sekundärluftleitungen (4, 5) in Verbindung stehende Ventileinrichtung (12) im Anschluss an ein Kaltstarteinblasen über eine mittels Maschinenparameter bestimmbare Zeit beide Sekundärluftleitungen (4, 5) gesteuert/geregelt verbindet.

2. Brennkraftmaschine nach Anspruch 1, **dadurch gekennzeichnet,**
- **dass** jede Sekundärluftleitung (4, 5) als ein rohrartiger Einsatz (10) ausgebildet ist, der
- am Außenumfang mit scheibenartigen, gegenseitig beabstandeten Wärmeübergangselementen (11) aus einem gut wärmeleitenden Material ausgerüstet ist.

3. Brennkraftmaschine nach Anspruch 1 oder 2, **dadurch gekennzeichnet, dass** mittels der Ventileinrichtung (12) Abgaspulsationen zwischen beiden Sekundärluftleitungen (4, 5) in Abhängigkeit der Dauer der gewünschten Zusatzheizwirkung gesteuert/geregelt gedrosselt sind.

4. Brennkraftmaschine nach den Ansprüchen 1 bis 3, **dadurch gekennzeichnet, dass** eine Luftpumpe (13) über eine Förderleitung (14) mit der Ventileinrichtung (12) in Verbindung steht, wobei ggf. ein zusätzliches Ventil (15) in der Förderleitung (14) vorgesehen sein kann.

5. Brennkraftmaschine nach den Ansprüchen 1 bis 4, **gekennzeichnet durch** die Verwendung bei einem Sechszylindermotor.

## Claims

1. Internal-combustion engine comprising an exhaust gas system and secondary air supply,
- wherein secondary air is supplied according to the ignition sequence of successive cylinders (Z1 to Z6) in batches via separate secondary air lines (4, 5), wherein
- the separately formed secondary air lines (4, 5) are arranged in a liquid-cooled cylinder head (6) of the multi-cylinder internal-combustion engine (1) with injection devices (7) into outlet ducts (8) on the cylinder head side, and in that
- line sections (4', 5') of the secondary air lines (4, 5) arranged on the outlet side are equipped between the injection devices (7) with additional heat transfer faces (9) for the coolant of the internal-combustion engine (1),
**characterised in that**
when the secondary air supply is switched off, a valve device (12) connected to the two secondary air lines (4, 5) connects the two secondary air lines (4, 5) with open-loop/closed-loop control over a time which can be determined by means of engine parameters following a cold start injection.

2. Internal-combustion engine according to claim 1, **characterised in that**
- each secondary air line (4, 5) is formed as a tubular insert (10) which
- is equipped on the outer periphery with disc-like, mutually spaced heat transfer elements (11) made of a material with good thermal conductivity.

3. Internal-combustion engine according to claim 1 or claim 2, **characterised in that** exhaust gas pulsations between the two secondary air lines (4, 5) are dampened with open-loop/closed-loop control by means of the valve device (12) as a function of the duration of the desired additional heating effect.

4. Internal-combustion engine according to claims 1 to 3, **characterised in that** an air pump (13) is connected to the valve device (12) via a delivery line (14), wherein an additional valve (15) may optionally be provided in the delivery line (14).

5. Internal-combustion engine according to claims 1 to 4, **characterised by** the use of a six cylinder engine.

## Revendications

1. Moteur à combustion interne avec un système d'échappement et une amenée d'air secondaire dans lequel :
- de l'air secondaire est amené par groupe ou par des conduites d'air secondaire spécifiques (4, 5) aux cylindres qui se suivent (Z1 à Z6) en correspondance avec la succession des allumages,
- les conduites d'air secondaire (4, 5), réalisées séparées, sont disposées dans une culasse (6) refroidie par un liquide, du moteur à combustion interne (1) polycylindrique avec des dispositifs d'insufflation (7) dans des canaux d'échappement (8) situés dans la culasse,
- des sections de conduite (4', 5') des conduites d'air secondaire (4, 5) situées du côté échappement, entre les dispositifs d'insufflation (7), sont équipées de surfaces additionnelles (9) pour transmettre de la chaleur à l'agent de refroidissement du moteur à combustion interne (1),
**caractérisé en ce que**
quand l'amenée d'air secondaire est interrompue, un dispositif de soupapes (12) relié aux deux conduites d'amenée d'air secondaire (4, 5), relie par l'effet de la commande ou de la régulation les deux conduites d'air secondaire (4, 5) à la suite d'une insufflation de démarrage à froid au-delà d'un temps qui peut être déterminé par les paramètres du moteur.

2. Moteur à combustion interne selon la revendication 1,
**caractérisé en ce que**
- chaque conduite d'air secondaire (4, 5) est constituée par un insert (10) tubulaire,
- cet insert est équipé périphériquement de l'élément de transfert thermique (11) en forme de disques espacés l'un de l'autre et faits d'un matériau bon conducteur de la chaleur.

3. Moteur à combustion interne selon la revendication 2,
**caractérisé en ce que**
par l'intermédiaire du dispositif à soupapes (12), des pulsations des gaz d'échappement entre les deux conduites d'air secondaire (4, 5) sont étranglées par l'effet d'une commande ou d'une régulation en fonction de la durée de l'effet de chauffage additionnel désiré.

4. Moteur à combustion interne selon les revendications 1 à 3,
**caractérisé en ce que**
une pompe à air (13) est en liaison par une conduite de refoulement (14) avec le dispositif à soupapes (12), une soupape supplémentaire (15) pouvant éventuellement être prévue dans la conduite de refoulement (14).

5. Moteur à combustion interne selon les revendications 1 à 4,
**caractérisé en ce qu'**
il s'agit d'un moteur à six cylindres.
